# FASCICULE DE BREVET EUROPEEN

(11) **EP 3 409 585 B1**
(45) Date de publication et mention de la délivrance du brevet: **24.07.2019**
(21) Numéro de dépôt: 18167096.9
(22) Date de dépôt: 12.04.2018
(51) Int. Cl.: B64C 25/54, B64C 27/04

(54) **AERONEF MUNI D'UN SYSTEME DE FLOTTABILITE, ET PROCEDE DE FLOTTABILITE**
LUFTFAHRZEUG, DAS MIT EINEM AUFSCHWIMMSYSTEM AUSGESTATTET IST, UND AUFSCHWIMMVERFAHREN
AN AIRCRAFT PROVIDED WITH A BUOYANCY SYSTEM, AND A BUOYANCY METHOD

(30) Priorité: 02.06.2017 FR 1770571
(43) Date de publication de la demande: 05.12.2018
(73) Titulaire: Airbus Helicopters, 13725 Marignane Cedex (FR)
(72) Inventeur: DELORME, Louis, 13820 ENSUES LA REDONNE (FR); PRUD'HOMME LACROIS, Pierre, 13127 VITROLLES (FR)
(74) Mandataire: GPI & Associés

(56) Documents cités:
- DE-B- 1 213 255
- FR-A1- 2 997 923
- FR-A1- 3 043 061
- US-A1- 2003 060 101
- US-A1- 2014 252 165

## Description

La présente invention concerne un aéronef muni d'un système de flottabilité, ainsi qu'un procédé de flottabilité.

Dès lors, l'invention se situe dans le domaine technique des systèmes de flottabilité d'un aéronef, et plus particulièrement d'un aéronef à voilure tournante.

Un tel système de flottabilité participe à la flottaison et à la stabilité d'un aéronef suite à un amerrissage. Le système de flottabilité peut être utilisé par exemple, suite à un amerrissage forcé, pour permettre l'évacuation des occupants de cet aéronef. Les appareils voués aux missions de transport de personnes en zones maritimes sont équipés en principe d'un tel système de flottabilité.

Des règlements de certification précisent d'ailleurs qu'un aéronef doit pouvoir amerrir et être stable sur l'eau avec son système de flottabilité. La stabilité doit être avérée pour des états de surface libre de l'eau et des niveaux de vent qui sont définis dans ces règlements de certification.

Ces états de surface libre de l'eau sont aussi nommés « état de mer », et s'applique à toute surface liquide. Le terme « amerrissage » couvre aussi le posé d'un aéronef sur toute surface libre d'eau, que ce soit sur la mer ou sur un lac par exemple. Des règlements de certification requièrent la stabilité d'un aéronef avec un état de mer particulier.

Un système de flottabilité peut comprendre des flotteurs.

Les flotteurs sont fixés de part et d'autre d'une cellule de l'aéronef. Le terme « cellule » désigne notamment une partie de l'aéronef logeant un poste de pilotage, voire une cabine et une soute, et pouvant comprendre un train d'atterrissage. Sur un hélicoptère, la cellule porte le rotor principal de l'hélicoptère. Par exemple, des flotteurs sont fixés à un train d'atterrissage de la cellule, ou encore à une paroi de la cellule.

Par ailleurs, les flotteurs sont par exemple pliés dans des conditions de vol normales, puis déployés dans le cas d'un amerrissage. A titre illustratif, un flotteur peut comprendre une outre gonflable qui peut être attachée à une cellule par au moins une ralingue.

Un système de flottabilité muni de flotteurs pliés comporte alors un moyen de déploiement pour déployer les flotteurs, et par exemple un gonfleur. Certains systèmes de flottabilité comprennent un moyen de déploiement dont le déploiement est commandé par le pilote et/ou le copilote par exemple, et/ou par un dispositif de déclenchement automatique. Par exemple, un bouton est placé sur un manche manoeuvré par un pilote, ce bouton étant relié à un gonfleur. La manoeuvre du bouton induit alors le gonflage des flotteurs.

En outre, selon une première stratégie les flotteurs peuvent être déployés après l'amerrissage.

Cette première stratégie permet de ne pas soumettre les flotteurs à des efforts résultant de l'amerrissage. Le dimensionnement des flotteurs et des ralingues est ainsi facilité. De plus, le moyen de déploiement des flotteurs peut comprendre des capteurs d'immersion détectant la présence d'eau pour activer le déploiement des flotteurs sans impliquer un pilote.

Par contre, la flottabilité de l'aéronef n'est de fait pas optimisée tant que les flotteurs ne sont pas déployés.

Selon une deuxième stratégie, les flotteurs peuvent être déployés en vol, et donc avant que l'aéronef se pose sur l'eau. Lorsqu'un pilote ou un système détecte qu'un amerrissage va se produire à court terme, ce pilote ou ce système commande le déploiement des flotteurs. Cette deuxième stratégie s'avère de fait intéressante en conférant à l'aéronef une flottabilité optimisée avant même que cet aéronef se trouve sur l'eau. L'enfoncement de l'aéronef dans l'eau lors de l'amerrissage peut être minimisé. De plus, les flotteurs absorbent une partie des efforts subis par l'aéronef lors de l'amerrissage.

Toutefois, le système de flottabilité doit dans ce cas être dimensionné pour supporter les efforts résultant de l'impact de l'aéronef sur l'eau. Les flotteurs peuvent aussi tendre à se déplacer fortement suite à un contact avec l'eau et risquent d'impacter des zones de l'aéronef. Ce risque peut induire le renforcement de ces zones.

Eventuellement, l'aéronef peut en parallèle comprendre un système de secours pour déployer les flotteurs après amerrissage.

La deuxième stratégie peut parfois être privilégiée pour optimiser la flottabilité d'un aéronef en raison de sa faculté à tendre à stabiliser l'aéronef dès le posé sur l'eau puisque les flotteurs sont déployés en vol. Toutefois, le dimensionnement d'un système de flottabilité appliquant cette deuxième stratégie peut s'avérer délicat.

Dans ce contexte, le document FR 3047231 décrit un procédé pour autoriser le gonflage des flotteurs en vol dans des conditions prédéterminées ce qui peut tendre à limiter les impacts d'un tel gonflage.

Le document EP 1429958 est éloigné de cette problématique en décrivant un système de flottabilité muni d'au moins un flotteur gonflable et d'un radeau gonflable.

Le document FR 3043061 décrit un aéronef comprenant un système de flottabilité qui est pourvu d'au moins deux flotteurs extérieurs disposés transversalement à l'extérieur et de part et d'autre de la cellule, et d'au moins un flotteur intérieur agencé dans un espace interne, chaque flotteur intérieur étant disposé au dessus des flotteurs extérieurs.

Les documents US 2003/060101, FR 2997923, DE 1213255 et US 2014/252165 sont aussi connus.

La présente invention a alors pour objet de proposer un procédé et un aéronef comprenant un système de flottabilité innovant.

L'invention vise donc un procédé de flottabilité pour déployer une pluralité de flotteurs d'un système de flottabilité d'un aéronef.

La pluralité de flotteurs comprenant plusieurs flotteurs principaux et plusieurs flotteurs secondaires, lesdits flotteurs principaux et lesdits flotteurs secondaires étant pliés en vol et devant être déployés en dehors d'une cellule de l'aéronef pour stabiliser ledit aéronef sur une surface liquide, le procédé comporte les étapes de :
- déploiement desdits flotteurs principaux en vol avant un amerrissage, à savoir avant que l'aéronef atteigne une surface liquide,
- déploiement desdits flotteurs secondaires après ledit amerrissage.

L'expression « en dehors d'une cellule » signifie que les flotteurs ne sont pas agencés au sein d'une cabine, mais se situent à l'extérieur de l'aéronef une fois déployés.

Un tel procédé peut tendre à allier les avantages de la première stratégie et de la deuxième stratégie évoquées précédemment.

Ce procédé prévoit en effet un déploiement séquentiel des flotteurs.

Lorsqu'un équipage ou un calculateur de l'aéronef détecte qu'un amerrissage va se produire à court terme, seuls les flotteurs principaux sont déployés en vol. Ces flotteurs principaux participent à la stabilisation de l'aéronef sur la surface liquide au moment de l'impact sur cette surface liquide. Après l'amerrissage, les flotteurs secondaires sont à leur tour déployés pour augmenter la stabilité de l'aéronef.

En raison de la présence des flotteurs secondaires, les flotteurs principaux peuvent avoir des dimensions réduites par rapport aux flotteurs de l'art antérieur. Par exemple, un flotteur de l'art antérieur est remplacé par un flotteur principal et un flotteur secondaire, ce flotteur principal et ce flotteur secondaire présentant conjointement un volume sensiblement égal au volume du flotteur de l'art antérieur voire plus faible en présence d'un empattement optimisé. Dès lors, ces flotteurs principaux subissent des efforts moins importants que les efforts subis par les flotteurs de l'art antérieur.

Par rapport à un système de flottabilité appliquant la première stratégie de l'art antérieur, ce procédé peut tendre à réduire les charges exercées sur les flotteurs et les dispositifs de fixation associés à l'amerrissage. Il peut en résulter un gain de masse.

De plus, ce procédé peut tendre à réduire le risque de perforation des flotteurs lors du contact avec la surface liquide.

En outre, en raison de la présence des flotteurs secondaires, les conséquences d'un éclatement d'un flotteur principal à l'amerrissage peuvent être minimisées. De même, les conséquences d'une perforation accidentelle peuvent être réduites.

Selon un autre aspect, un empattement important peut séparer les flotteurs secondaires, cet empattement pouvant tendre à améliorer la stabilité de l'aéronef.

La liberté de mouvement des flotteurs est éventuellement aussi limitée.

Par rapport à un système de flottabilité appliquant la deuxième stratégie de l'art antérieur, ce procédé tend à améliorer de fait la stabilité de l'aéronef durant l'amerrissage, et peut tendre à limiter l'enfoncement de l'aéronef.

En outre, les flotteurs principaux peuvent tendre à réduire la charge devant être absorbée par la cellule à l'impact avec la surface liquide.

Le procédé peut de plus comporter une ou plusieurs des caractéristiques qui suivent.

Ainsi, ce procédé peut comporter une étape d'appariement desdits flotteurs, ladite pluralité de flotteurs comprenant au moins une paire de flotteurs principaux et au moins une paire de flotteurs secondaires, chacune desdites au moins une paire de flotteurs principaux comprenant deux flotteurs principaux disposés transversalement de part et d'autre de ladite cellule, et chacune desdites au moins une paire de flotteurs secondaires comprenant deux flotteurs secondaires disposés transversalement de part et d'autre de ladite cellule.

Les flotteurs sont appariés pour optimiser la stabilité de l'aéronef.

Selon un aspect, le procédé peut comporter une étape de formation d'une pluralité d'ensembles flottants, chaque ensemble flottant comprenant un unique flotteur principal et un unique flotteur secondaire agencés côte à côte, chaque flotteur principal d'un ensemble flottant étant agencé transversalement entre le flotteur secondaire de cet ensemble flottant et ladite cellule de l'aéronef.

L'aéronef comporte alors des ensembles flottants comprenant chacun un flotteur secondaire disposé à côté voire contre un flotteur principal. Un ensemble flottant tend à former un flotteur ayant deux compartiments.

Le flotteur secondaire d'un ensemble flottant peut être solidarisé au flotteur principal de cet ensemble flottant. Selon une variante, le flotteur secondaire d'un ensemble flottant est cousu et/ou collé au flotteur principal de cet ensemble flottant. Selon une autre variante, le flotteur secondaire et le flotteur principal d'un ensemble flottant présente une cloison commune en formant un seul et unique ballon compartimenté.

En outre, un flotteur secondaire d'un ensemble flottant est écarté de la cellule par le flotteur principal de cet ensemble flottant. Cette architecture peut tendre à maximiser la distance séparant transversalement deux flotteurs secondaires et donc à améliorer la stabilité à flot de l'aéronef. En raison de cet agencement, les flotteurs principaux peuvent être qualifiés de flotteurs intérieurs, les flotteurs secondaires pouvant être qualifiés de flotteurs extérieurs. De plus, les volumes des flotteurs principaux et secondaires une fois déployés peuvent éventuellement être minimisés.

L'invention vise aussi un aéronef muni d'un système de flottabilité, ledit système de flottabilité comprenant une pluralité de flotteurs, chaque flotteur de ladite pluralité de flotteurs étant plié en vol en dehors d'une phase d'amerrissage, ledit système de flottabilité comprenant un système de déploiement pour déployer chaque flotteur de ladite pluralité de flotteurs en dehors d'une cellule de l'aéronef.

Ladite pluralité de flotteurs comporte plusieurs flotteurs principaux et plusieurs flotteurs secondaires, ledit système de flottabilité étant configuré pour déployer en dehors de ladite cellule lesdits flotteurs principaux en vol avant un amerrissage et pour déployer lesdits flotteurs secondaires en dehors de ladite cellule après ledit amerrissage.

Cet aéronef peut de plus comporter une ou plusieurs des caractéristiques qui suivent.

Ainsi, la pluralité de flotteurs peut former une pluralité d'ensembles flottants, chaque ensemble flottant comprenant un unique flotteur principal et un unique flotteur secondaire agencés côte à côte, un flotteur principal d'un ensemble flottant étant agencé transversalement entre le flotteur secondaire de cet ensemble flottant et ladite cellule.

Par exemple, chaque ensemble flottant est agencé en lieu et place d'un flotteur de l'art antérieur.

Eventuellement, ladite pluralité d'ensembles flottants comporte au moins une paire d'ensembles flottants, ladite au moins une paire d'ensembles flottants comprenant deux ensembles flottants disposés transversalement de part et d'autre de ladite cellule.

Par exemple, l'aéronef comporte un nombre pair d'ensembles flottants, ces ensembles flottants étant de plus appariés.

A titre illustratif, l'aéronef peut comporter une paire d'ensembles flottants avant comprenant un ensemble flottant avant gauche et un ensemble flottant avant droit. L'aéronef peut comporter une paire d'ensembles flottants arrière comprenant un ensemble flottant arrière gauche et un ensemble flottant arrière droit. Les termes avant et arrière sont alors à considérer au regard du sens d'avancement de l'aéronef vers l'avant.

Selon un aspect, lesdits deux ensembles flottants d'une paire d'ensembles flottants sont disposés symétriquement de part et d'autre de ladite cellule.

Par exemple, les deux ensembles flottants d'une paire d'ensembles flottants sont disposés symétriquement de part et d'autre d'un plan antéropostérieur de symétrie de l'aéronef.

Selon un aspect, un flotteur secondaire et un flotteur principal peuvent avoir une cloison commune.

Selon un aspect un flotteur secondaire peut être cousu et/ou collé à un flotteur principal.

L'expression « et/ou » signifie que soit un flotteur secondaire est cousu à un flotteur principal, soit un flotteur secondaire est collé à un flotteur principal, soit un flotteur secondaire est cousu et collé à un flotteur principal.

Selon un aspect, chaque flotteur principal est relié à la cellule par au moins une ralingue principale.

Ainsi, un flotteur principal est attaché localement à la cellule de l'aéronef, mais peut se déplacer par rapport à la cellule. De plus, une telle ralingue vise à limiter la liberté de mouvement du flotteur principal.

Selon un aspect, chaque flotteur secondaire est relié à la cellule par au moins une ralingue secondaire.

Eventuellement, chaque flotteur secondaire est de plus solidaire d'un flotteur principal, soit en présentant une cloison commune avec ce flotteur principal soit en étant collé et/ou cousu à ce flotteur principal.

Les flotteurs secondaires peuvent posséder des ralingues qui leurs sont propres pour optimiser la stabilité de l'aéronef.

Selon une première réalisation, le système de déploiement peut comporter au moins un gonfleur principal en communication fluidique avec uniquement au moins un flotteur principal pour déployer uniquement les flotteurs principaux, ledit système de déploiement comportant au moins un gonfleur secondaire en communication fluidique avec uniquement au moins un flotteur secondaire pour gonfler uniquement les flotteurs secondaires.

L'expression « avec uniquement au moins un flotteur principal » signifie qu'un gonfleur principal ne peut pas être relié directement à un flotteur secondaire. Un gonfleur principal injecte un fluide dans un ou plusieurs flotteurs principaux. De même, l'expression « avec uniquement au moins un flotteur secondaire » signifie qu'un gonfleur secondaire ne peut pas être relié directement à un flotteur principal.

Le terme « gonfleur » désigne tout système permettant de gonfler au moins un flotteur, à savoir permettant de le déplier pour le rendre opérationnel. Ainsi, le gonfleur peut être un dispositif injectant un fluide dans un flotteur. Le gonfleur peut être par exemple un gonfleur électrique, explosif ou chimique.

Le système de déploiement peut comporter différents gonfleurs affectés respectivement au déploiement des flotteurs principaux et des flotteurs secondaires.

Les flotteurs principaux et les flotteurs secondaires sont indépendants, le déploiement des flotteurs principaux ne pouvant pas engendrer le déploiement des flotteurs secondaires et inversement.

Selon une deuxième réalisation, chaque flotteur secondaire est en communication fluidique avec au moins un flotteur principal par une valve, ledit système de déploiement comportant au moins un gonfleur principal en communication fluidique avec uniquement les flotteurs principaux pour injecter un fluide uniquement dans les flotteurs principaux, aucun gonfleur alimentant directement en fluide un flotteur secondaire.

Avant un amerrissage, chaque gonfleur principal injecte un fluide dans au moins un flotteur principal pour le gonfler. Chaque flotteur principal présente ainsi un premier volume V1, une première pression P1 régnant dans le flotteur principal.

Les valves sont en outre fermées. Dès lors, les flotteurs secondaires ne sont pas déployés.

Au moment de l'impact de l'aéronef sur une surface liquide voire suite à l'impact, les valves sont ouvertes.

Les flotteurs secondaires sont alors gonflés à l'aide du fluide contenu dans les flotteurs principaux. A l'équilibre, les flotteurs principaux et les flotteurs secondaires sont gonflés.

Selon une première variante du deuxième mode de réalisation, ladite valve est une valve passive, ladite valve passive s'ouvrant lorsqu'une pression régnant dans ledit flotteur principal muni de cette valve passive dépasse un seuil, ladite pression étant inférieure audit seuil avant un amerrissage.

Une telle valve passive peut prendre la forme d'un clapet de surpression, d'une valve à bille...

Selon une deuxième variante du deuxième mode de réalisation, ledit aéronef comporte une unité de traitement, ladite valve est une valve active, la valve active étant reliée à cette unité de traitement, la valve active étant commandée par cette unité de traitement.

Une valve active peut être par exemple une valve électromécanique commandée par une unité de traitement pour s'ouvrir ou se fermer.

L'invention et ses avantages apparaîtront avec plus de détails dans le cadre de la description qui suit avec des exemples donnés à titre illustratif en référence aux figures annexées qui représentent :
- la figure 1, un schéma illustrant un aéronef selon l'invention ayant des flotteurs principaux et des flotteurs secondaires qui sont pliés en vol d'avancement et ne sont pas en communication fluidique,
- la figure 2, un schéma illustrant un flotteur principal en communication fluidique avec un flotteur secondaire,
- la figure 3, un schéma illustrant une étape de déploiement des flotteurs principaux en vol avant amerrissage,
- la figure 4, un schéma illustrant une étape de déploiement des flotteurs secondaires après amerrissage, et
- la figure 5, un schéma présentant un aéronef ayant plusieurs ensembles flottants.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

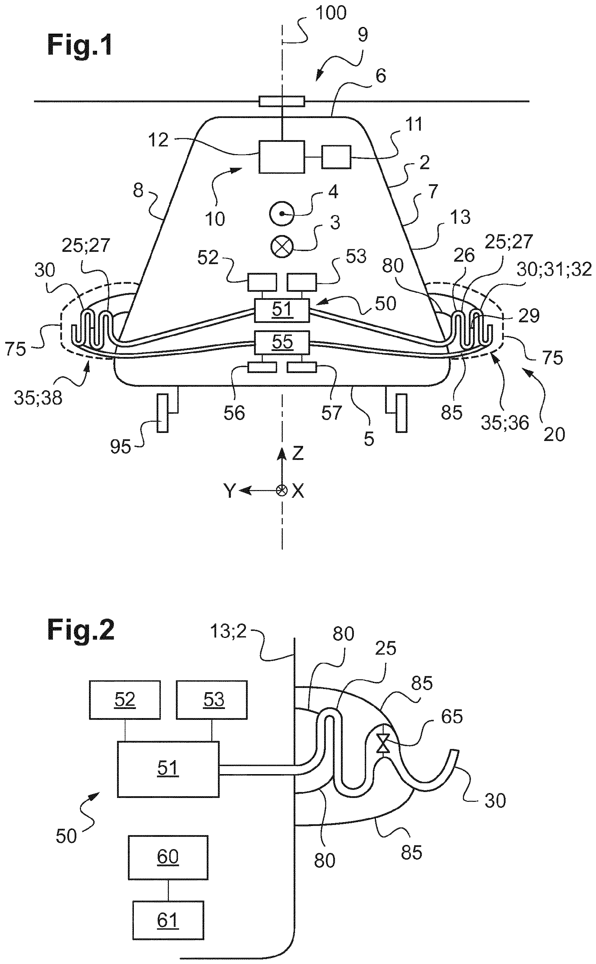

La figure 1 présente un aéronef 1 muni d'un système de flottabilité 20 selon l'invention. Cet aéronef peut par exemple être un giravion.

Cet aéronef 1 comprend une cellule 2. La cellule 2 s'étend longitudinalement d'une extrémité avant 4 vers une extrémité arrière 3 le long d'un plan antéropostérieur 100. De plus, la cellule 2 s'étend transversalement d'un flanc gauche 7 vers un flanc droit 8 de part et d'autre du plan antéropostérieur 100, et en élévation d'une partie inférieure 5 vers une partie supérieure 6. Eventuellement, le plan antéropostérieur est un plan de symétrie de l'aéronef. Les termes « gauche » et « droit » sont définis au regard d'un individu disposé dans la cellule et regardant devant lui vers l'avant de l'aéronef.

La partie inférieure 5 comporte un fond de la cellule 2 alors que la partie supérieure 6 comporte le sommet de la cellule 2. La partie inférieure 5 est classiquement munie d'un train d'atterrissage 95, alors que la partie supérieure peut porter un rotor 9 participant à la sustentation voire à la propulsion de l'aéronef. Ce rotor 9 est mis en rotation par une installation motrice 10. Cette installation motrice 10 inclut au moins un moteur 11 voire au moins une boîte de transmission de puissance 12 interposée entre le moteur 11 et le rotor 9.

La cellule peut porter d'autres rotors, et par exemple un rotor arrière participant au contrôle du mouvement en lacet du giravion.

En outre, cet aéronef 1 est de plus pourvu d'un système de flottabilité 20 selon l'invention afin de pouvoir amerrir.

Un tel système de flottabilité 20 est pourvu de plusieurs flotteurs 25, 30. Chaque flotteur peut comprendre une enveloppe 26, 31 qui flotte sur l'eau, cette enveloppe emprisonnant un gaz par exemple.

Chaque flotteur 25, 30 peut être attaché par son enveloppe et/ou par au moins une ralingue 80, 85 à une structure de la cellule 2, à savoir par exemple à une paroi 13 de la cellule 2 ou à un train d'atterrissage... Par exemple, les flotteurs 25, 30 sont reliés à une partie basse de l'aéronef située à proximité, voire au niveau, du fond de la cellule. Le cas échéant, les flotteurs 25, 30 peuvent être reliés à un train d'atterrissage à patins.

En particulier, le système de flottabilité 20 est pourvu d'au moins deux flotteurs dits « flotteurs principaux 25 ». Chaque flotteur principal 25 est disposé à l'extérieur EXT de la cellule 2. L'expression « disposé à l'extérieur EXT de la cellule 2 » signifie que les flotteurs concernés sont au moins partiellement déployés en dehors de la cellule 2 pour faire flotter l'aéronef. Les flotteurs principaux 25 peuvent être fixés de manière usuelle à une paroi 13 de la cellule 2 et/ou à un train d'atterrissage par exemple, par le biais d'au moins une ralingue principale 80 reliant une enveloppe 26 d'un flotteur principal à la cellule et /ou par le biais d'une fixation de l'enveloppe 26 d'un flotteur principal à la cellule.

Les flotteurs principaux peuvent être appariés. Ainsi, une paire 27 de flotteurs principaux 25 comporte un flotteur principal gauche qui est disposé du côté du flanc gauche 7 de l'aéronef, et un flotteur principal droit qui est disposé du côté du flanc droit 8 de l'aéronef. Deux flotteurs principaux 25 appariés peuvent être disposés symétriquement de part et d'autre du plan antéropostérieur 100 de symétrie de l'aéronef dans une position stable de l'aéronef.

Par exemple, l'aéronef comporte une voire deux paires 27 de flotteurs principaux 25.

En référence à la figure 2, le système de flottabilité 20 comporte en outre au moins deux flotteurs dits « flotteurs secondaires 30 ». Chaque flotteur secondaire 30 est disposé à l'extérieur EXT de la cellule 2.

Les flotteurs secondaires 30 peuvent être appariés. Ainsi, une paire 32 de flotteurs secondaires 30 comporte un flotteur secondaire gauche qui est disposé du côté du flanc gauche 7 de l'aéronef, et un flotteur secondaire droit qui est disposé du côté du flanc droit 8 de l'aéronef. Deux flotteurs secondaires 30 appariés peuvent être disposés symétriquement de part et d'autre du plan antéropostérieur 100 de symétrie de l'aéronef dans une position stable de l'aéronef.

Les flotteurs secondaires 30 peuvent être fixés de manière usuelle à une paroi 13 de la cellule 2 et/ou à un train d'atterrissage par exemple, par le biais d'au moins une ralingue secondaire 85 reliant une enveloppe 31 d'un flotteur secondaire à la cellule et /ou par le biais d'une fixation de l'enveloppe 26 d'un flotteur principal à la cellule.

De plus ou de manière alternative, chaque flotteur secondaire 30 peut être fixé à un flotteur principal 25. Par exemple, une enveloppe 26 d'un flotteur principal 25 est cousue et/ou collée à une enveloppe 31 d'un flotteur secondaire 30. Selon un autre exemple, un flotteur principal 25 et un flotteur secondaire 30 peuvent comprendre une cloison 29 commune. Le terme « cloison » désigne une partie de l'enveloppe 31 d'un flotteur secondaire représentant aussi une partie de l'enveloppe 26 d'un flotteur principal.

Un flotteur principal 25 peut en outre être agencé transversalement entre un flotteur secondaire 30 et le plan antéropostérieur 100 et/ou la cellule 2.

Par ailleurs, les flotteurs principaux 25 et les flotteurs secondaires 30 peuvent former des ensembles flottants 35.

Un tel ensemble flottant 35 comprend un flotteur principal 25 et un flotteur secondaire 30 qui sont disposés à côté l'un de l'autre, et par exemple transversalement à côté l'un de l'autre selon une direction perpendiculaire au plan antéropostérieur 100. Au sein d'un ensemble flottant, le flotteur principal 25 est disposé transversalement entre le flotteur secondaire 30 et le plan antéropostérieur 100 et/ou la cellule 2.

Par exemple, l'aéronef ne comporte que des ensembles flottants 35. Cet aéronef ne comporte alors pas un flotteur principal 25 ou un flotteur secondaire 30 isolé, à savoir n'appartenant pas à un ensemble flottant 35. L'aéronef est uniquement muni d'ensembles flottants 35 ayant chacun un flotteur principal 25 et un flotteur secondaire 30.

Eventuellement, l'aéronef comporte au moins une paire 39 d'ensembles flottants. Une telle paire 39 d'ensembles flottants est munie de deux ensembles flottants disposés transversalement de part et d'autre de la cellule 2 et du plan antéropostérieur 100, selon une direction perpendiculaire au plan antéropostérieur 100 par exemple. Ainsi, une paire 39 d'ensembles flottants inclut un ensemble flottant gauche 37 situé du côté gauche 7 de l'aéronef et un ensemble flottant droit 38 situé du côté droit 8 de l'aéronef.

Eventuellement, l'aéronef comporte un nombre pair d'ensembles flottants, tous les ensembles flottants étant de plus appariés de manière à appartenir chacun à une paire 39 d'ensembles flottants.

Selon un aspect, deux ensembles flottants 37, 38 d'une paire 39 d'ensembles flottants sont disposés symétriquement de part et d'autre de la cellule 2 et/ou du plan antéropostérieur 100.

Par ailleurs, les flotteurs principaux 25 et les flotteurs secondaires 30 sont pliés dans des conditions normales, à savoir en dehors d'une phase d'amerrissage, pour minimiser leur encombrement.

Par exemple, les flotteurs principaux 25 et les flotteurs secondaires 30 sont pliés et agencés dans un emballage 75 usuel, cet emballage s'ouvrant lors du déploiement des flotteurs. Un même emballage 75 peut entourer le cas échéant le flotteur principal 25 et le flotteur secondaire 30 d'un ensemble flottant 35.

Pour optimiser la stabilité d'un aéronef sur une surface liquide, les flotteurs principaux 25 et les flotteurs secondaires 30 sont dépliés pour occuper un volume important. Par exemple, les flotteurs principaux 25 et les flotteurs secondaires 30 peuvent être des flotteurs gonflables, ces flotteurs gonflables présentant une enveloppe qui se déplie quand un fluide est injecté dans cette enveloppe. Dès lors, les flotteurs principaux 25 et les flotteurs secondaires 30 sont dégonflés en dehors des phases d'amerrissage, et gonflés pour flotter sur une surface liquide.

Pour déployer les flotteurs, c'est-à-dire à pour les déplier, le système de flottabilité comporte un système de déploiement 50 pour déployer les flotteurs principaux 25 et les flotteurs secondaires 30, à savoir pour augmenter le volume des flotteurs principaux 25 et des flotteurs secondaires 30. Lorsque ce système de déploiement 50 est activé, ce système de déploiement permet de déplier les flotteurs principaux 25 et les flotteurs secondaires 30 afin d'augmenter leurs volumes pour stabiliser l'aéronef sur une surface liquide.

Dans ces conditions, le système de déploiement 50 peut comprendre au moins un gonfleur dénommé « gonfleur principal 51 » par commodité. Chaque gonfleur principal est en communication fluidique avec au moins un flotteur principal 25.

Par exemple, un unique gonfleur principal 51 est relié à tous les flotteurs principaux 25 par une pluralité de conduites. Selon un autre exemple, le système de déploiement comporte autant de gonfleurs principaux que de flotteurs principaux, chaque flotteur principal étant relié par une conduite à un gonfleur qui lui est dédié. Selon un autre exemple, deux gonfleurs principaux peuvent être reliés par au moins une conduite à un même flotteur principal 25. D'autres réalisations sont évidemment possibles, un même gonfleur principal pouvant gonfler un ou plusieurs flotteurs principaux.

Le système de déploiement peut comprendre un organe de commande principal 52 relié à chaque gonfleur principal pour commander le fonctionnement de chaque gonfleur principal. L'expression « organe de commande principal 52 » désigne un organe manoeuvrable par un pilote, tel que par exemple un bouton, une commande tactile, une commande vocale, une commande visuelle...

Le système de déploiement peut comprendre un système de commande automatique principal 53 relié à chaque gonfleur principal pour commander le fonctionnement de chaque gonfleur principal. L'expression « système de commande automatique principal 53 » désigne un système qui commande chaque gonfleur principal selon une logique prédéterminée, en générant un ordre de déploiement automatiquement lorsque des conditions prédéterminées sont remplies.

Le système de commande automatique principal 53 peut comporter un calculateur possédant par exemple un processeur, un circuit intégré, un système programmable, un circuit logique, ces exemples ne limitant pas la portée donnée au terme « calculateur ». Ce calculateur peut être éventuellement armé par un moyen d'activation manoeuvrable par un individu. Le moyen d'activation peut posséder au moins une position permettant de rendre actif le système de commande automatique principal 53. Ainsi, le système de commande automatique principal 53 peut être inhibé dans certaines situations, par exemple lorsque l'aéronef ne survole pas une surface liquide.

A titre illustratif, le calculateur peut être relié à des capteurs d'altitude pour requérir le fonctionnement du gonfleur principal lorsque l'aéronef atteint une altitude seuil, le cas échéant sous réserve que le système de commande automatique principal 53 soit armé.

Le système de commande automatique principal 53 et/ou l'organe de commande principal 52 sont configurés pour déployer les flotteurs principaux en vol avant amerrissage.

On peut se référer à l'état de la technique pour trouver des exemples de réalisation de gonfleurs et de systèmes de commande de ces gonfleurs pour déployer les flotteurs principaux en vol avant amerrissage.

Selon le premier mode de réalisation de la figure 1, le système de déploiement 50 peut comprendre au moins un gonfleur dénommé « gonfleur secondaire 55 » par commodité. Chaque gonfleur secondaire 55 est en communication fluidique avec au moins un flotteur secondaire 30.

Par exemple, un unique gonfleur secondaire 55 est relié à tous les flotteurs secondaires 30 par une pluralité de conduites. Selon un autre exemple, le système de déploiement comporte autant de gonfleurs secondaires 55 que de flotteurs secondaires 30, chaque flotteur secondaire 30 étant relié par une conduite à un gonfleur qui lui est propre. Selon un autre exemple, deux gonfleurs secondaires 55 peuvent être reliés par au moins une conduite à un même flotteur secondaire 30. D'autres réalisations sont évidemment possibles, un même gonfleur secondaire pouvant gonfler un ou plusieurs flotteurs secondaires.

Le système de déploiement peut comprendre un organe de commande secondaire 56 relié à chaque gonfleur secondaire pour commander le fonctionnement de chaque gonfleur secondaire. L'expression « organe de commande secondaire 56 » désigne un organe manoeuvrable par un pilote, tel que par exemple un bouton, une commande tactile, une commande vocale, une commande visuelle...

Le système de déploiement peut comprendre un système de commande automatique secondaire 57 relié à chaque gonfleur secondaire pour commander le fonctionnement de chaque gonfleur secondaire. L'expression « système de commande automatique secondaire 57 » désigne un système qui commande chaque gonfleur secondaire selon une logique prédéterminée en générant un ordre de déploiement automatiquement lorsque des conditions prédéterminées sont remplies. A titre illustratif, un système de commande automatique secondaire 57 est muni d'un calculateur et de capteurs d'immersion pour requérir le fonctionnement du gonfleur secondaire lorsque les capteurs d'immersion détectent une immersion de l'aéronef.

Le système de commande automatique secondaire 57 peut comporter un calculateur possédant par exemple un processeur, un circuit intégré, un système programmable, un circuit logique, ces exemples ne limitant pas la portée donnée au terme « calculateur ». Ce calculateur peut être éventuellement armé par un moyen d'activation manoeuvrable par un individu. Le moyen d'activation peut posséder au moins une position permettant de rendre actif le système de commande automatique secondaire 57. Ainsi, le système de commande automatique secondaire 57 peut être inhibé dans certaines situations, par exemple lorsque l'aéronef ne survole pas une surface liquide.

Le système de commande automatique secondaire 57 et/ou l'organe de commande secondaire 56 sont configurés pour déployer les flotteurs secondaires après amerrissage.

On peut se référer à l'état de la technique pour trouver des exemples de réalisation de gonfleurs et de systèmes de commande de ces gonfleurs pour déployer les flotteurs secondaires après amerrissage.

Selon le deuxième mode de réalisation de la figure 2, aucun gonfleur n'est prévu pour alimenter directement les flotteurs secondaires 30, à savoir sans passer par un flotteur principal 25.

Selon ce deuxième mode de réalisation au moins un gonfleur principal 51 est donc relié par une conduite à au moins un flotteur principal 25, chaque flotteur principal 25 étant relié par une conduite à au moins un gonfleur principal 51.

De plus, chaque flotteur secondaire 30 est relié à un flotteur principal 25 par une valve 65. Par exemple, chaque flotteur secondaire 30 est relié à un unique flotteur principal 25 par une valve, et chaque flotteur principal 25 est relié à un flotteur secondaire 30 par une telle valve.

Une valve 65 fait ainsi office d'interface entre un volume interne principal d'un flotteur principal et un volume interne secondaire d'un flotteur secondaire. Lorsqu'une valve est ouverte, une partie du fluide contenu dans le flotteur principal remplit le flotteur secondaire jusqu'à ce qu'une position d'équilibre soit atteinte. A l'équilibre, le flotteur principal et le flotteur secondaire sont gonflés. Si besoin est, on peut à ce stade compléter le volume de fluide par l'action d'un gonfleur.

Cette valve 65 peut être une valve passive qui s'ouvre lorsque la pression régnant dans le volume interne principal dépasse un seuil de pression. La valve passive peut être dimensionnée pour que le seuil soit atteint lorsque le flotteur principal subit des efforts lors de l'amerrissage ou bien lors de l'activation d'un gonfleur le cas échéant.

De manière alternative, cette valve 65 peut être une valve active électromécanique qui s'ouvre sur ordre d'une unité de traitement 60. L'unité de traitement peut déterminer si des conditions de gonflage prédéterminées sont remplies, et peut activer les valves 65 pour gonfler les flotteurs secondaires 30.

L'unité de traitement peut prendre la forme d'un moyen de sélection manoeuvrable par un individu qui permet de transmettre au calculateur un ordre de gonflage des flotteurs principaux et/ou secondaires. L'expression « moyen de sélection» peut désigner un bouton, un écran tactile, un moyen de commande vocale, un clavier ou un pointeur permettant de manipuler des moyens informatiques...

L'unité de traitement 60 peut aussi prendre la forme d'un calculateur relié à des capteurs. Par exemple, au moins un capteur d'immersion peut permettre de détecter la présence d'eau, et transmet le cas échéant à l'unité de traitement un ordre de gonflage des flotteurs secondaires 30.

L'unité de traitement peut posséder par exemple un processeur, un circuit intégré, un système programmable, un circuit logique, ces exemples ne limitant pas la portée donnée à l'expression « unité de traitement».

Les figures 1, 3 et 4 permettent d'illustrer le procédé mis en oeuvre par l'invention.

En référence à la figure 1, les flotteurs principaux 25 et les flotteurs secondaires 30 sont pliés en vol dans des conditions normales.

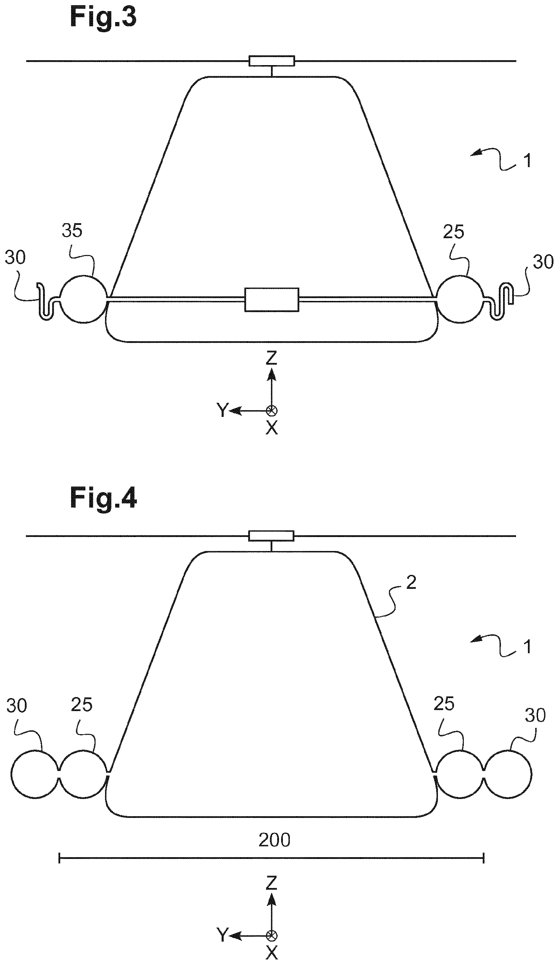

En référence à la figure 3, lorsqu'un amerrissage est imminent, tous les flotteurs principaux 25 sont déployés, soit sur ordre d'un pilote soit sur ordre d'un calculateur.

En référence à la figure 4, suite à l'amerrissage l'aéronef se trouve sur une surface liquide. Tous les flotteurs secondaires 30 sont déployés, soit sur ordre d'un pilote soit sur ordre d'un calculateur ou d'une unité de traitement.

En agençant un flotteur principal 25 entre un flotteur secondaire 30 et la cellule 2, la figure 4 illustre le fait qu'un empattement 200 important peut séparer deux flotteurs secondaires 30 transversalement. Cette caractéristique peut optimiser la stabilité à flot de l'aéronef.

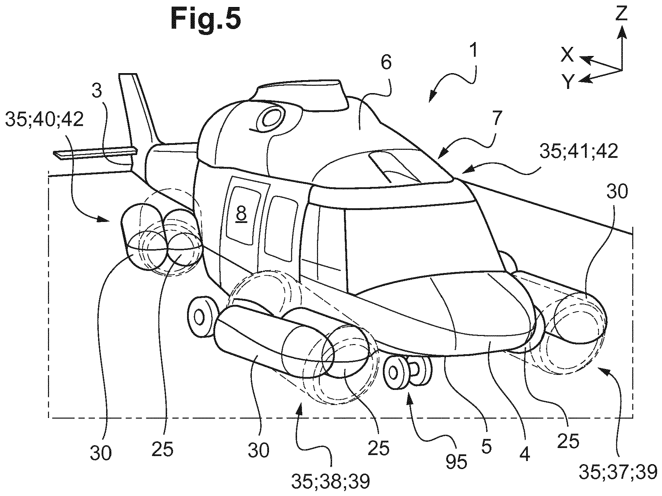

La figure 5 illustre un aéronef muni de flotteurs principaux 25 et de flotteurs secondaires 30 déployés.

Cet aéronef présente une paire 39 d'ensembles flottants avant comprenant un ensemble flottant avant gauche 37 et un ensemble flottant avant droit 38.

De plus, cet aéronef présente une paire 42 d'ensembles flottants arrière comprenant un ensemble flottant arrière gauche 41 et un ensemble flottant arrière droit 40.

Par ailleurs, la figure 5 fait apparaître en transparence la définition de flotteurs selon l'art antérieur. La figure 5 illustre le fait qu'un ensemble flottant peut être agencé en lieu et place d'un tel flotteur de l'art antérieur, et peut présenter un encombrement sensiblement équivalent.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme défini dans les revendications suivantes.

## Revendications

1. Procédé de flottabilité pour déployer une pluralité de flotteurs d'un système de flottabilité (20) d'un aéronef (1),
ladite pluralité de flotteurs comprenant plusieurs flotteurs principaux (25) et plusieurs flotteurs secondaires (30), lesdits flotteurs principaux (25) et lesdits flotteurs secondaires (30) étant pliés en vol et devant être déployés en dehors d'une cellule (2) de l'aéronef (1) pour stabiliser ledit aéronef (1) sur une surface liquide, ledit procédé comportant l'étape de :
- déploiement desdits flotteurs principaux (25) en vol avant un amerrissage.
**caractérise en ce que** ledit procédé comporte l'étape de
- déploiement desdits flotteurs secondaires (30) après ledit amerrissage.

2. Procédé selon la revendication 1,
**caractérisé en ce que** ledit procédé comporte une étape d'appariement desdits flotteurs, ladite pluralité de flotteurs comprenant au moins une paire (27) de flotteurs principaux (25) et au moins une paire (32) de flotteurs secondaires (30), chacune desdites au moins une paire (27) de flotteurs principaux (25) comprenant deux flotteurs principaux (25) disposés transversalement de part et d'autre de ladite cellule (2), et chacune desdites au moins une paire (32) de flotteurs secondaires (30) comprenant deux flotteurs secondaires (30) disposés transversalement de part et d'autre de ladite cellule (2).

3. Procédé selon l'une quelconque des revendications 1 à 2, **caractérisé en ce que** ledit procédé comporte une étape de formation d'une pluralité d'ensembles flottants (35), chaque ensemble flottant (35) comprenant un unique flotteur principal (25) et un unique flotteur secondaire (30) agencés côte à côte, chaque flotteur principal (25) d'un ensemble flottant (35) étant agencé transversalement entre le flotteur secondaire (30) de cet ensemble flottant (35) et ladite cellule (2).

4. Aéronef (1) muni d'un système de flottabilité (20), ledit système de flottabilité (20) comprenant une pluralité de flotteurs, chaque flotteur de ladite pluralité de flotteurs étant plié en vol en dehors d'une phase d'amerrissage, ledit système de flottabilité (20) comprenant un système de déploiement (50) pour déployer chaque flotteur de ladite pluralité de flotteurs en dehors d'une cellule (2) de l'aéronef (1), ladite pluralité de flotteurs comportant plusieurs flotteurs principaux (25) et plusieurs flotteurs secondaires (30) ledit système de flottabilité (20) étant configuré pour déployer en dehors de ladite cellule (2) lesdits flotteurs principaux (25) en vol avant un amerrissage,
**caractérise en ce que** ledit système de flottabilité (20) est configuré pour déployer lesdits flotteurs secondaires (30) en dehors de ladite cellule (2) après ledit amerrissage.

5. Aéronef selon la revendication 4,
**caractérisé en ce que** ladite pluralité de flotteurs forme une pluralité d'ensembles flottants (35), chaque ensemble flottant (35) comprenant un unique flotteur principal (25) et un unique flotteur secondaire (30) agencés côte à côte, un flotteur principal (25) d'un ensemble flottant (35) étant agencé transversalement entre le flotteur secondaire (30) de cet ensemble flottant (35) et ladite cellule (2).

6. Aéronef selon la revendication 5,
**caractérisé en ce que** ladite pluralité d'ensembles flottants (35) comporte au moins une paire (39) d'ensembles flottants (35), ladite au moins une paire (39) d'ensembles flottants (35) comprenant deux ensembles flottants (35) disposés transversalement de part et d'autre de ladite cellule (2).

7. Aéronef selon la revendication 6,
**caractérisé en ce que** lesdits deux ensembles flottants (37, 38) d'une paire (39) d'ensembles flottants (35) sont disposés symétriquement de part et d'autre de ladite cellule (2).

8. Aéronef selon l'une quelconque des revendications 4 à 7,
**caractérisé en ce que** chaque flotteur principal (25) est relié à la cellule (2) par au moins une ralingue principale (80).

9. Aéronef selon l'une quelconque des revendications 4 à 8,
**caractérisé en ce que** chaque flotteur secondaire (30) est relié à la cellule par au moins une ralingue secondaire (85).

10. Aéronef selon l'une quelconque des revendications 4 à 9,
**caractérisé en ce qu'**un flotteur secondaire (30) et un flotteur principal (25) ont une cloison commune (29).

11. Aéronef selon l'une quelconque des revendications 4 à 10,
**caractérisé en ce qu'**un flotteur secondaire (30) est cousu et/ou collé à un flotteur principal (25).

12. Aéronef selon l'une quelconque des revendications 4 à 11,
**caractérisé en ce que** ledit système de déploiement (50) comporte au moins un gonfleur principal (51) en communication fluidique avec uniquement au moins un flotteur principal (25) pour gonfler uniquement les flotteurs principaux (25), ledit système de déploiement (50) comportant au moins un gonfleur secondaire (55) en communication fluidique avec uniquement au moins un flotteur secondaire (30) pour gonfler uniquement les flotteurs secondaires (30).

13. Aéronef selon l'une quelconque des revendications 4 à 12,
**caractérisé en ce que** chaque flotteur secondaire (30) est en communication fluidique avec au moins un flotteur principal (25) par une valve (65), ledit système de déploiement (50) comportant au moins un gonfleur principal (51) en communication fluidique avec uniquement les flotteurs principaux (25) pour injecter un fluide uniquement dans les flotteurs principaux (25), aucun gonfleur alimentant directement en fluide un flotteur secondaire (30).

14. Aéronef selon la revendication 13,
**caractérisé en ce que** ladite valve (65) est une valve passive, ladite valve passive s'ouvrant lorsqu'une pression régnant dans ledit flotteur principal (25) muni de cette valve passive dépasse un seuil, ladite pression étant inférieure audit seuil avant un amerrissage.

15. Aéronef selon la revendication 13,
**caractérisé en ce que** ledit aéronef (1) comporte une unité de traitement (60), ladite valve (65) étant une valve active, la valve active étant reliée à cette unité de traitement, la valve active étant commandée par cette unité de traitement (60).

## Patentansprüche

1. Auftriebsverfahren zum Ausfahren einer Mehrzahl von Schwimmern eines Auftriebssystems (20) eines Fluggeräts (1),
wobei die Mehrzahl von Schwimmern eine Mehrzahl von Hauptschwimmern (25) und eine Mehrzahl von Sekundärschwimmern (30) umfasst, wobei die Hauptschwimmer (25) und die Sekundärschwimmer (30) im Flug zusammengelegt sind und außerhalb einer Flugzeugzelle (2) des Fluggeräts (1) ausgefahren werden sollen, um das Fluggerät (1) auf einer Flüssigkeitsoberfläche zu stabilisieren, wobei das Verfahren den Schritt umfasst:
- Ausfahren der Hauptschwimmer (25) im Flug vor einer Wasserung,
**dadurch gekennzeichnet, dass** das Verfahren den Schritt umfasst:
- Ausfahren der sekundären Schwimmer (30) nach der Wasserung.

2. Verfahren nach Anspruch 1,
**dadurch gekennzeichnet, dass** das Verfahren einen Schritt des Paarbildens der Schwimmer umfasst, wobei die Mehrzahl der Schwimmer mindestens ein Paar (27) von Hauptschwimmern (25) und mindestens ein Paar (32) von Sekundärschwimmern (30) umfasst, wobei jedes der mindestens einen Paare (27) von Hauptschwimmern (25) zwei Hauptschwimmer (25) umfasst, die quer auf beiden Seiten der Zelle (2) angeordnet sind, und jedes der mindestens einen Paare (32) von Sekundärschwimmern (30) zwei Sekundärschwimmer (30) umfasst, die quer auf beiden Seiten der Zelle (2) angeordnet sind.

3. Verfahren nach einem der Ansprüche 1 bis 2,
**dadurch gekennzeichnet, dass** das Verfahren einen Schritt des Bildens einer Mehrzahl von schwimmenden Anordnungen (35) umfasst, wobei jede schwimmende Anordnung (35) einen einzelnen Hauptschwimmer (25) und einen einzelnen Sekundärschwimmer (30) umfasst, die Seite an Seite angeordnet sind, wobei jeder Hauptschwimmer (25) einer schwimmenden Anordnung (35) quer zwischen dem Sekundärschwimmer (30) dieser schwimmenden Anordnung (35) und der Zelle (2) angeordnet ist.

4. Fluggerät (1) mit einem Auftriebssystem (20), wobei das Auftriebssystem (20) eine Mehrzahl von Schwimmern umfasst, wobei jeder der Mehrzahl von Schwimmern im Flug außerhalb einer Wasserungsphase zusammengelegt ist, wobei das Auftriebssystem (20) ein Ausfahrsystem (50) umfasst, um jeden Schwimmer der Mehrzahl von Schwimmern außerhalb einer Flugzeugzelle (2) des Fluggeräts (1) auszufahren, wobei die Mehrzahl von Schwimmern eine Mehrzahl von Hauptschwimmern (25) und eine Mehrzahl von Sekundärschwimmern (30) umfasst, wobei das Auftriebssystem (20) konfiguriert ist, um die Hauptschwimmer (25) im Flug vor einer Wasserung außerhalb der Flugzeugzelle (2) auszufahren,
**dadurch gekennzeichnet, dass** das Auftriebssystem (20) konfiguriert ist, um die Sekundärschwimmer (30) nach der Wasserung außerhalb der Zelle (2) auszufahren.

5. Fluggerät nach Anspruch 4,
**dadurch gekennzeichnet, dass** die Mehrzahl von Schwimmern eine Mehrzahl von schwimmenden Anordnungen (35) bildet, wobei jede schwimmende Anordnung (35) einen einzelnen Hauptschwimmer (25) und einen einzelnen Sekundärschwimmer (30) umfasst, die Seite an Seite angeordnet sind, wobei ein Hauptschwimmer (25) einer schwimmenden Anordnung (35) quer zwischen dem Sekundärschwimmer (30) dieser schwimmenden Anordnung (35) und der Zelle (2) angeordnet ist.

6. Fluggerät nach Anspruch 5,
**dadurch gekennzeichnet, dass** die Mehrzahl von schwimmenden Anordnungen (35) mindestens ein Paar (39) von schwimmenden Anordnungen (35) umfasst, wobei das mindestens eine Paar (39) von schwimmenden Anordnungen (35) zwei schwimmende Anordnungen (35) umfasst, die quer auf beiden Seiten der Zelle (2) angeordnet sind.

7. Fluggerät nach Anspruch 6,
**dadurch gekennzeichnet, dass** die beiden schwimmenden Anordnungen (37, 38) eines Paares (39) von schwimmenden Anordnungen (35) symmetrisch auf beiden Seiten der Zelle (2) angeordnet sind.

8. Fluggerät nach einem der Ansprüche 4 bis 7,
**dadurch gekennzeichnet, dass** jeder Hauptschwimmer (25) mit der Zelle (2) durch mindestens ein Haupsaumtau (80) verbunden ist.

9. Fluggerät nach einem der Ansprüche 4 bis 8,
**dadurch gekennzeichnet, dass** jeder Sekundärschwimmer (30) mit der Zelle durch mindestens ein Sekundärsaumtau (85) verbunden ist.

10. Fluggerät nach einem der Ansprüche 4 bis 9,
**dadurch gekennzeichnet, dass** ein Sekundärschwimmer (30) und ein Hauptschwimmer (25) eine gemeinsame Trennwand (29) aufweisen.

11. Fluggerät nach einem der Ansprüche 4 bis 10,
**dadurch gekennzeichnet, dass** ein Sekundärschwimmer (30) an einen Hauptschwimmer (25) angenäht und/oder -geklebt ist.

12. Fluggerät nach einem der Ansprüche 4 bis 11,
**dadurch gekennzeichnet, dass** das Ausfahrsystem (50) mindestens einen Hauptinflator (51) in Fluidverbindung mit nur wenigstens einem Hauptschwimmer (25) zum Aufblasen nur der Hauptschwimmer (25) umfasst, und dass das Ausfahrsystem (50) mindestens einen Sekundärinflator (55) in Fluidverbindung mit nur wenigstens einem Sekundärschwimmer (30) zum Aufblasen nur der Sekundärschwimmer (30) umfasst.

13. Fluggerät nach einem der Ansprüche 4 bis 12,
**dadurch gekennzeichnet, dass** jeder Sekundärschwimmer (30) über ein Ventil (65) in Fluidverbindung mit mindestens einem Hauptschwimmer (25) steht, und dass das Ausfahrsystem (50) mindestens einen Hauptinflator (51) in Fluidverbindung mit nur den Hauptschwimmern (25) umfasst, um ein Fluid nur in die Hauptschwimmer (25) einzuleiten, wobei kein Inflator Fluid direkt einem Sekundärschwimmer (30) zuführt.

14. Fluggerät nach Anspruch 13,
**dadurch gekennzeichnet, dass** das Ventil (65) ein passives Ventil ist, wobei sich das passive Ventil öffnet, wenn ein Druck, der in dem mit dem passiven Ventil versehenen Hauptschwimmer (25) vorherrscht, einen Schwellenwert überschreitet, wobei der Druck vor einer Wasserung niedriger als der Schwellenwert ist.

15. Fluggerät nach Anspruch 13,
**dadurch gekennzeichnet, dass** das Fluggerät (1) eine Verarbeitungseinheit (60) aufweist, und dass das Ventil (65) ein aktives Ventil ist, wobei das aktive Ventil mit der Verarbeitungseinheit verbunden ist und das aktive Ventil durch die Verarbeitungseinheit (60) gesteuert wird.

## Claims

1. Buoyancy method for deploying a plurality of floats of a buoyancy system (20) of an aircraft (1), said plurality of floats including a plurality of main floats (25) and a plurality of secondary floats (30), said main floats (25) and said secondary floats (30) being folded in flight and having to be deployed outside of an airframe (2) of the aircraft (1) in order to stabilise said aircraft (1) on a liquid surface, said method comprising the step of:
- deploying said main floats (25) in flight before a water landing, **characterised in that** said method comprises the step of
- deploying said secondary floats (30) after said water landing.

2. Method according to claim 1, **characterised in that** said method comprises a step of pairing said floats, said plurality of floats including at least one pair (27) of main floats (25) and at least one pair (32) of secondary floats (30), each of said at least one pair (27) of main floats (25) including two main floats (25) arranged transversely on either side of said airframe (2), and each of said at least one pair (32) of secondary floats (30) including two secondary floats (30) arranged transversely on either side of said airframe (2).

3. Method according to either claim 1 or claim 2, **characterised in that** said method comprises a step of forming a plurality of floating units (35), each floating unit (35) including a single main float (25) and a single secondary float (30) arranged side by side, each main float (25) of a floating unit (35) being arranged transversely between the secondary float (30) of said floating unit (35) and said airframe (2).

4. Aircraft (1) provided with a buoyancy system (20), said buoyancy system (20) comprising a plurality of floats, each float of said plurality of floats being folded in flight outside of a water landing phase, said buoyancy system (20) including a deployment system (50) for deploying each float of said plurality of floats outside of an airframe (2) of the aircraft (1), said plurality of floats comprising a plurality of main floats (25) and a plurality of secondary floats (30), said buoyancy system (20) being designed to deploy said main floats (25) outside of said airframe (2) in flight prior to a water landing, **characterised in that** said buoyancy system (20) is designed to deploy said secondary floats (30) outside of said airframe (2) after said water landing.

5. Aircraft according to claim 4, **characterised in that** said plurality of floats forms a plurality of floating units (35), each floating unit (35) including a single main float (25) and a single secondary float (30) arranged side by side, a main float (25) of a floating unit (35) being arranged transversely between the secondary float (30) of said floating unit (35) and said airframe (2).

6. Aircraft according to claim 5, **characterised in that** said plurality of floating units (35) comprises at least one pair (39) of floating units (35), said at least one pair (39) of floating units (35) including two floating units (35) arranged transversely on either side of said airframe (2).

7. Aircraft according to claim 6, **characterised in that** said two floating units (37, 38) of a pair (39) of floating units (35) are arranged symmetrically on either side of said airframe (2).

8. Aircraft according to any of claims 4 to 7, **characterised in that** each main float (25) is connected to the airframe (2) by at least one main rope (80).

9. Aircraft according to any of claims 4 to 8, **characterised in that** each secondary float (30) is connected to the airframe by at least one secondary rope (85).

10. Aircraft according to any of claims 4 to 9, **characterised in that** a secondary float (30) and a main float (25) have a common partition (29).

11. Aircraft according to any of claims 4 to 10, **characterized in that** a secondary float (30) is sewn and/or adhered to a main float (25).

12. Aircraft according to any of claims 4 to 11, **characterised in that** said deployment system (50) comprises at least one main inflator (51) in fluid communication with only at least one main float (25) for inflating only the main floats (25), said deployment system (50) comprising at least one secondary inflator (55) in fluid communication with only at least one secondary float (30) for inflating only the secondary floats (30).

13. Aircraft according to any of claims 4 to 12, **characterised in that** each secondary float (30) is in fluid communication with at least one main float (25) by a valve (65), said deployment system (50) comprising at least one main inflator (51) in fluid communication with only the main floats (25) for injecting a fluid only into the main floats (25), with no inflator directly supplying fluid to a secondary float (30).

14. Aircraft according to claim 13, **characterised in that** said valve (65) is a passive valve, said passive valve opening when a pressure in said main float (25) provided with said passive valve exceeds a threshold, said pressure being lower than said threshold before a water landing.

15. Aircraft according to claim 13, **characterised in that** said aircraft (1) comprises a processing unit (60), said valve (65) being an active valve, the active valve being connected to said processing unit, the active valve being controlled by said processing unit (60).
